# EUROPEAN PATENT APPLICATION

(11) **EP 1 847 491 A1**
(43) Date of publication of application: **24.10.2007**
(21) Application number: 07075303.3
(22) Date of filing: 20.04.2007
(51) Int. Cl.: B65G 61/00, B25J 13/08, G01B 11/24

(54) **Detection and control system for large fruit crates, and method therefor**

(30) Priority: 20.04.2006 NL 1031643; 02.08.2006 NL 1032263
(71) Applicant: De Greef's Wagen-, Carrosserie- en Machinebouw B.V., 4196 JB Tricht (NL)
(72) Inventor: De Greef, Jacob Hendrik, 7181 BM Waardenburg (NL)
(74) Representative: Bruin, Cornelis Willem

(57) **Abstract**

System for detecting and/or picking up and/or displacing crates for stacking and/or unstacking, comprising:
- one or more sensors (8,10) arranged close to the crates for sensing the crates and/or openings therein; and
- control means which are operatively coupled to the sensors (8,10). The system can also be provided with one or more gripping means (32,34) operatively coupled to the system for picking up and displacing at least one crate.

## Description

The present invention relates to a system for detecting fruit crates and openings therein for the purpose of picking up and displacing at least one crate.

Known systems for handling large crates make use of sensors which are mounted on or close to the prongs or forks of for instance a fork-lift truck or robot arm. A relative position between a gripping member and the crate with opening can hereby be achieved. The fork-lift truck or robot arm must here be in the vicinity of the crates in order to make measurement possible. This limits the processing speed of the crates. In addition, the sensors can be damaged by the relatively heavy operations which have be performed, and may generate no values, or incorrect values. The sensors can also be easily soiled. An additional problem is that in practice diverse types of crate are used at the same time.

The present invention has for its object to provide an improved system and method.

The present invention provides a system for detecting and/or picking up and/or displacing crates for stacking and/or unstacking, comprising:
- one or more sensors arranged close to the crates for sensing the crates and/or openings therein; and
- control means which are operatively coupled to the sensors.

By preferably making use of an upright which can be connected to a rigid construction, such as for instance structural parts of the building, a robust system and reliable detection system are obtained, wherein the chance of damage as a result of for instance incorrect manoeuvres of for instance a fork-lift truck is avoided. The sensors can also be placed on the rear side of the crates, i.e. in a relatively clean environment. This also results in a robust and reliable measurement with the sensors of the detection system. Among other things, the type of crate can hereby be determined. A further advantage is that, by positioning the sensors close to the crates, the measurement can be performed at any desired moment and that it is not necessary to wait for the availability of for instance a fork-lift truck. The logistical operation can hereby be improved.

In a preferred embodiment according to the invention the system is operatively connected to one or more gripping means for picking up and displacing at least one crate. The gripping means can hereby be steered fully and in good time to the correct position, wherein a desired trajectory is followed. The gripping means preferably consist of two grippers which pick up and displace the large crates from either side, wherein these grippers form part of an automated system and/or are connected to a robot arm. This achieves that the logistical operation is simplified and the number of manual operations is limited.

In a preferred embodiment according to the invention the sensors are movable up and downward along a stack of crates.

Due to the movement in substantially vertical direction the sensors can determine the overall height of the stack, the number of crates in a stack and the position of the openings in the crate for gripping with the gripping means. The number of sensors required is limited by moving the sensor. The sensors preferably comprise photocells for a robust measurement.

In a further preferred embodiment according to the invention control means are provided with computing means for determining the correct position for picking up the crate.

The correct position for the gripping means can be determined in good time by providing the control means with the results of the measurements performed with the detection system. The speed of processing of the crates is hereby increased. The control system is preferably further provided with logistical computing means for determining the most suitable trajectory for the one or more gripping means. The route for the gripping means can hereby be adjusted to the presence of crates at a first set-down position or a second set-down position. If, using the detection system, it is known that only a limited number of crates has been placed at the placing position, the gripping means can for instance follow a shortened path if they have to be displaced from the set-down position to the placing position. This achieves a further increase in the handling speed of the gripping means.

In a further preferred embodiment according to the invention the upright and/or the sensors can be moved reciprocally close to the at least one stack of crates. The substantially horizontal movement makes it possible to measure at multiple positions with one detection system. This limits the complexity and the amount of equipment required.

The present invention also relates to a control system for handling fruit crates, comprising:
- detection means for detecting crates and/or the openings therein for the purpose of picking up the at least one crate;
- one or more gripping means for picking up and displacing the one crate;
- computing means for determining a correct gripping point for the gripping means; and
- control means for controlling the gripping means.

The information measured with the sensors of the detection system can be used by the control means to control the gripping means. Not only can the operation of picking up and displacing the crates hereby be automated, the operating speed can also be increased. Logistical computing means are preferably provided for determining the most suitable trajectory for the gripping means for the purpose of displacing at least one crate. The whole logistical operation can hereby be further improved.

The present invention further relates to a method for picking up and displacing at least one crate, comprising the following steps of:
- detecting a crate, with openings for picking up thereof, using a detection system;
- determining the height of a stack of crates and/or trajectory for one or more gripping means;
- controlling the gripping means; and
- picking up and displacing the crates with the gripping means.

Hereby achieved is that the operation required to displace at least one crate can be performed more efficiently. The above stated advantages are hereby achieved.

Further advantages, features and details of the invention are elucidated on the basis of a preferred embodiment thereof, wherein reference is made to the accompanying drawings, in which:
- figure 1 shows a top view of the embodiment according to the invention;
- figure 2 shows a front view of the embodiment of figure 1; and
- figure 3 shows a side view of the embodiment of figures 1 and 2.

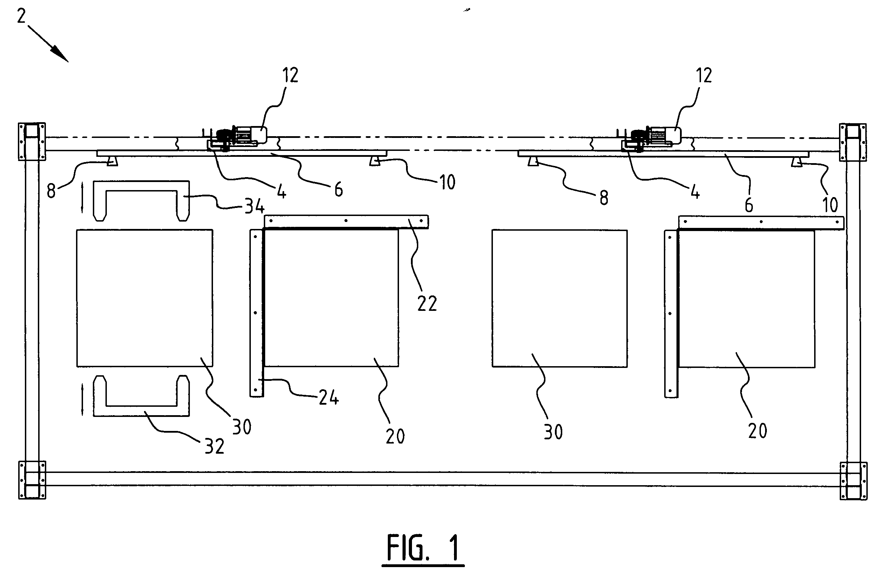

Figure 1 shows a system 2 provided with an upright 4 having thereon a transverse connection 6 on which two sensors 8 and 10 are mounted. System 2 is provided with a drive 12 for vertical movement of transverse connection 6. In the preferred embodiment two detection systems 2 are shown. The crates are placed against stop 22 and stop 24 at placing position 20. These stops 22, 24 serve for the correct positioning of a crate. A supplied crate must be placed at placing position 20, whereafter by means of a gripping system and/or a robot arm (not shown) it is placed in a desired set-down position 30 by making use of two forks 32 and 34 which can lift and displace the crate or crates via the openings arranged therein.

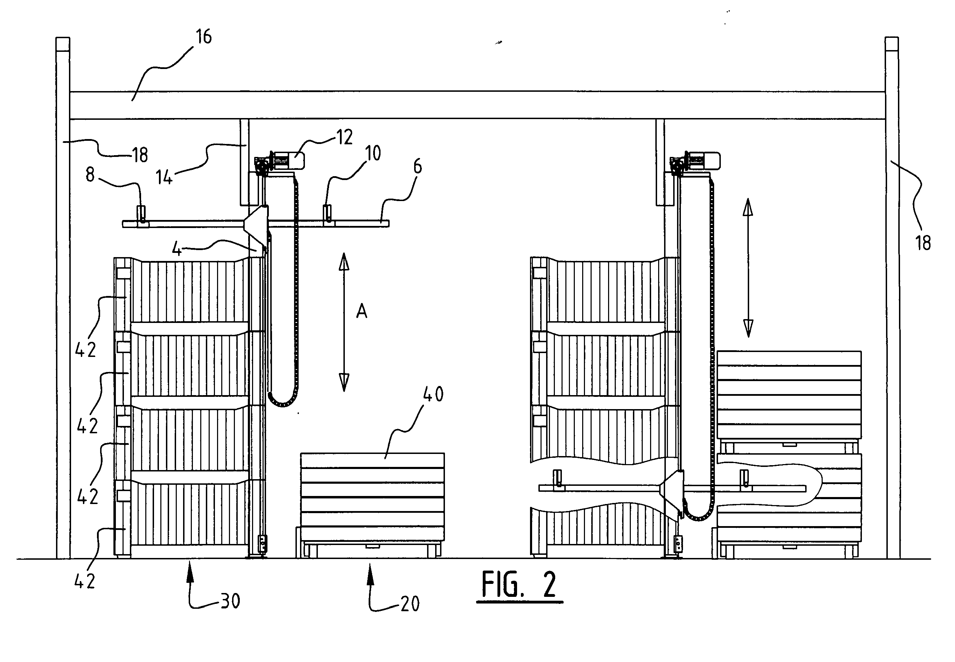

Upright 4 is placed on the rear side of the crates between placing position 20 and set-down position 30. In order to guarantee sufficient rigidity, upright 4 is connected by means of connecting beam 14 to support beam 16, which is placed vertically between two supporting pillars 18. By means of drive 12 the transverse connection 6 with sensors 8 and 10 placed thereon can move vertically in the direction of arrow A, as shown in figure 2. In the figure, one crate 40 is placed in the left-hand system at placing position 20, this crate having to be displaced to set-down position 30 where four crates 42 of another type are already located. It is noted here that crates of different types can also have been or can also be placed together in one stack. Crates with a height of 400 mm and 550 mm are for instance used together in practice, and can therefore also end up on one stack.

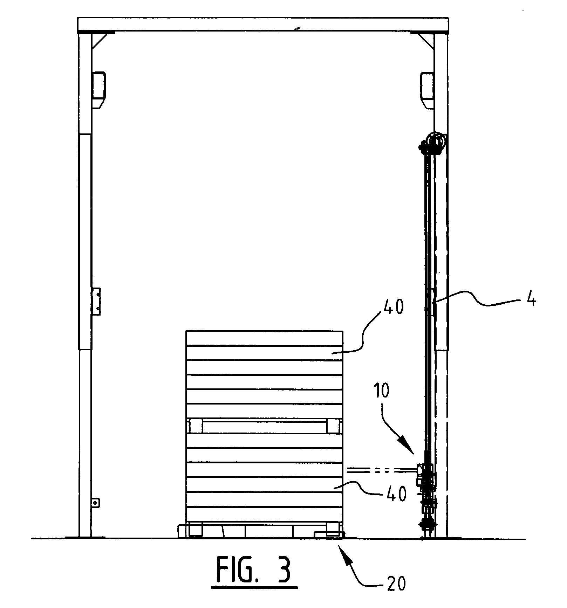

By moving the transverse member 6 downward with sensor 10 placed thereon detection takes place, for placing position 20 as shown in a side view in figure 3 for the right-hand system of figure 2, of how many crates 40 are lying on top of each other at placing position 20, where the openings for gripping with forks 32 and 34 are situated, and preferably also of which type of crate is involved. As soon as the height of a crate which must be displaced and the location of the openings in this crate are known using detection system 2, the control system of the installation can position forks 32 and 34 correctly. A trajectory for forks 32 and 34 can be determined by making use of the information from system 2, whereafter these forks pick up and displace the crate and/or crates to the desired set-down position 30. The height of the stack of crates at set-down position 30 is herein taken into account. This is possible because the number of crates and/or the position of the openings therein are measured at this set-down position by means of sensor 8 due to a vertical movement of transverse member 6 along upright 4. The overall number of crates at this position can therefore be inferred herefrom.

The present invention is by no means limited to the above described preferred embodiments; the rights sought, within the scope of which many modifications can be envisaged, are defined by the following claims.

## Claims

1. System for detecting and/or picking up and/or displacing crates for stacking and/or unstacking, comprising:
- one or more sensors arranged close to the crates for sensing the crates and/or openings therein; and
- control means which are operatively coupled to the sensors.

2. System as claimed in claim 1, wherein the control system is operatively coupled to gripping means for picking up and displacing at least one crate.

3. System as claimed in claim 1 or 2, wherein the sensors are mounted on an upright for movement in vertical direction.

4. System as claimed in claim 1, 2 or 3, wherein the sensors comprise photocells.

5. System as claimed in claims 1-4, wherein the control system is provided with computing means for determining the position of the crate and/or the openings therein.

6. System as claimed in one or more of the foregoing claims 2-5, wherein the control system is provided with logistical computing means for determining a suitable trajectory for the gripping means for the purpose of causing these latter to grip in the opening and/or transport the at least one crate to a set-down position.

7. System as claimed in one or more of the claims 1-5, wherein the upright and/or the sensors can be moved reciprocally along positions for at least one stack of crates.

8. Control system for handling crates, comprising:
- detection means for detecting crates and/or the openings therein for the purpose of picking up the at least one crate;
- one or more gripping means for picking up and displacing the one crate;
- computing means for determining a correct gripping point for the gripping means; and
- control means for controlling the gripping means.

9. Control system as claimed in claim 8, provided with a system as claimed in one or more of the claims 1-7.

10. Method for picking up and displacing at least one crate, comprising the following steps of:
- detecting a crate, with openings for picking up thereof, using a detection system;
- determining the height of a stack of crates and/or trajectory for one or more gripping means;
- controlling the gripping means; and
- picking up and displacing the crates with the gripping means.

11. Method as claimed in claim 10, wherein a system as claimed in one or more of the claims 1-7 and/or a control system as claimed in claim 8 or 9 is applied.
